Europäisches Patentamt

European Patent Office

Office européen des brevets

(19)

(11) Numéro de publication: **0 377 362**
**A1**

## (12) DEMANDE DE BREVET EUROPEEN

(21) Numéro de dépôt: **89403452.9**

(22) Date de dépôt: **13.12.89**

(51) Int. Cl.5: **A63B 51/02**

(30) Priorité: **14.12.88 FR 8816440**

(43) Date de publication de la demande:
**11.07.90 Bulletin 90/28**

(84) Etats contractants désignés:
**AT BE CH DE ES GB GR IT LI LU NL SE**

(71) Demandeur: **COUSIN FRERES S.A.**
**8 Rue Abbé Bonpain**
**F-59117 Wervicq-Sud(FR)**

(72) Inventeur: **Cousin, Jean-Claude**
**La Sapinière**
**F-59117 Wervicq-Sud(FR)**
Inventeur: **Delvael, Yves**
**9, Pionierslaan**
**B-8670 Wervik(BE)**

(74) Mandataire: **Viard, Jean**
**Cabinet VIARD 28 bis, avenue Mozart**
**F-75016 Paris(FR)**

(54) **Corde synthétique de tennis ou analogue et son procédé de fabrication.**

(57) Corde synthétique pour tennis ou jeux analogues comprenant une âme centrale et un revêtement extérieur. Selon l'invention, le revêtement extérieur (2) extrudé et étiré, assure à la fois la protection contre l'abrasion et la réponse dynamique de la corde tendue après impact de la balle.

FIG.1

EP 0 377 362 A1

## CORDE SYNTHETIQUE DE TENNIS OU ANALOGUE ET SON PROCEDE DE FABRICATION

La présente invention a pour objet une corde destinée, en particulier, mais non exclusivement, à être disposée sous tension sur le panier ou tamis d'une raquette de tennis, ainsi que son procédé de fabrication.

Une corde de tennis doit présenter un certain nombre de caractéristiques qui sont a priori incompatibles. Il faut qu'elle présente de bonnes qualités dynamiques, c'est-à-dire qu'elle puisse reprendre sa configuration initiale après l'impact d'une balle, c'est-à-dire qu'elle soit susceptible de présenter une certaine élasticité après une prétension. Mais, par ailleurs, elle doit présenter une bonne résistance à l'abrasion pour pouvoir subir, sans s'altérer trop rapidement, l'usure résultant du contact et du déplacement des cordes l'une sur l'autre lors de l'impact avec la balle, et le cisaillement résultant de son contact avec le cadre de la raquette aux points d'accrochage. De plus, les cordes doivent être capables de conserver, au mieux, leur tension initiale appliquée lors de la pose de la corde sur le tamis, par exemple de 18 à 30daN.

A l'origine constituées de boyaux animaux (catgut) de boeuf ou de mouton, il a été proposé depuis longtemps de substituer au boyau un monofilament ou des assemblages de monofilaments de matière synthétique telle que du polyamide, qui, bien que présentant des qualités inférieures en ce qui concerne leur réponse au choc d'une balle en jeu, possèdent une bonne résistance à l'abrasion ce qui leur confère une longévité bien supérieure à celle du boyau animal. De telles cordes sont, bien évidemment, aisées à fabriquer et leur coût est faible.

Afin de remédier aux inconvénients des cordes constituées d'un ou plusieurs monofilaments, il a déjà été proposé de réaliser un deuxième type de corde de tennis. Il s'agit des cordes composites, sans âme centrale telle que celle qui est décrite dans FR-A-80 20663. Ces cordes sont constituées par un ensemble de multifilaments, par exemple en polyamide, constituant une armature intégrée dans une matrice de polyuréthane constituant l'élément résistant à l'abrasion. Bien que cette corde donne des résultats en jeux, égaux ou supérieurs à ceux des boyaux naturels, leur procédé de fabrication relativement lent, rend celle-ci coûteuse. D'où une diffusion pratiquement réservée aux meilleurs joueurs.

Un troisième type de corde synthétique composite consiste en un noyau ou âme centrale en matière susceptible de répondre aux sollicitations dynamiques, par exemple un monofilament de nylon ou des multifilaments tressés ou toronnés, recouverte d'une gaine extrudée en matériau résistant à l'abrasion. Dans ce type de corde, l'épaisseur de la gaine est réduite et est, par exemple, égale à 2/10ème de mm pour une corde de diamètre final de 1,45 mm. Afin d'éviter l'effet de "chaussette" ou glissement de la gaine par rapport à l'âme, certains fabricants interposent une tresse ou un guipage autour de l'âme, de manière à former une liaison mécanique entre la gaine extrudée et l'âme, par pénétration et ancrage de la gaine extrudée dans les reliefs du tressage ou du guipage. De nombreuses cordes sont ainsi réalisées par assemblage d'une âme active revêtue d'un gainage extrudé passif. L'âme active ou dynamique caractérise le comportement de la corde en jeu, alors que le gainage lui-même ne joue qu'un rôle non significatif dans le comportement dynamique de la corde à la suite de l'impact d'une balle.

Les cordes ainsi constituées, pour un diamètre extérieur de 1,40 à 1,45 mm, qui est le diamètre usuel des plus grosses cordes de tennis, présentent des résistances à la rupture relativement faibles, de l'ordre de 60 daN. Leur durée de vie est par suite limitée et s'avère insuffisante. Mais le procédé de fabrication en continu, par extrusion de la gaine sur l'âme, est économique.

La présente invention a pour objet de remédier à ces inconvénients et de permettre la fabrication d'une corde synthétique de tennis ou analogue pouvant être manufacturée à un coût raisonnable et présentant un comportement satisfaisant en jeu.

Selon la présente invention, une corde synthétique pour tennis ou jeu analogue comprenant une âme centrale étirable et un revêtement extérieur extrudé sur l'âme assurent la protection de l'âme est caractérisé en ce que la section de l'âme est faible par rapport à la section du revêtement, l'ensemble de la corde subissant un étirage suivi d'une stabilisation thermique de sorte que, la réponse dynamique de la corde soit assurée par le revêtement.

La section de l'âme peut être égale à 0,1 à 0,4 fois la section totale de la corde. Pratiquement, l'âme passive sert essentiellement de support à l'extrusion du revêtement actif.

C'est l'étirage dans des conditions bien définies qui permet l'orientation moléculaire et confère ainsi la ténacité et les caractéristiques physiques de la corde. L'extrusion est effectuée dans une filière de 3 mm de diamètre, par exemple, pour obtenir après étirage et stabilisation un diamètre de l'ordre de 1,45 mm.

Le revêtement extrudé est, de préférence torsadé afin de lui donner un meilleur comportement aux angles, lors de la pose de la corde sur le tamis de la raquette, et une meilleure souplesse améliorant sa tenue à l'indentation.

La présente invention vise également le procédé de fabrication d'une telle corde, caractérisé en ce qu'il consiste à :
- extruder un matériau thermoplastique sur une âme,
- étirer l'ensemble revêtement + âme,
- torsader l'ensemble de la corde.

Le torsadage de la corde peut intervenir, soit directement à la sortie de la filière, soit à l'aide d'une tête d'équerre tournante, soit grâce à un profilé adapté d'extrusion. Il peut également être réalisé après étirage par une opération classique de torsion à chaud.

Les caractéristiques de ces opérations varient avec la nature des matériaux traités. Par exemple, pour les polyamides ou polyesters, le taux d'étirage est de l'ordre de 4 à 5. Après étirage, une stabilisation thermique effectuée à haute température est généralement souhaitable.

D'autres caractéristiques et avantages de l'invention apparaîtront au cours de la description qui va suivre d'un mode particulier de réalisation, donné uniquement à titre d'exemple non limitatif, en regard des dessins qui représentent :
- la figure 1, une section verticale d'une corde selon l'invention ;
- la figure 2, une vue latérale d'un morceau de corde ;
- la figure 3, un schéma de la machine de fabrication d'une corde selon l'invention.

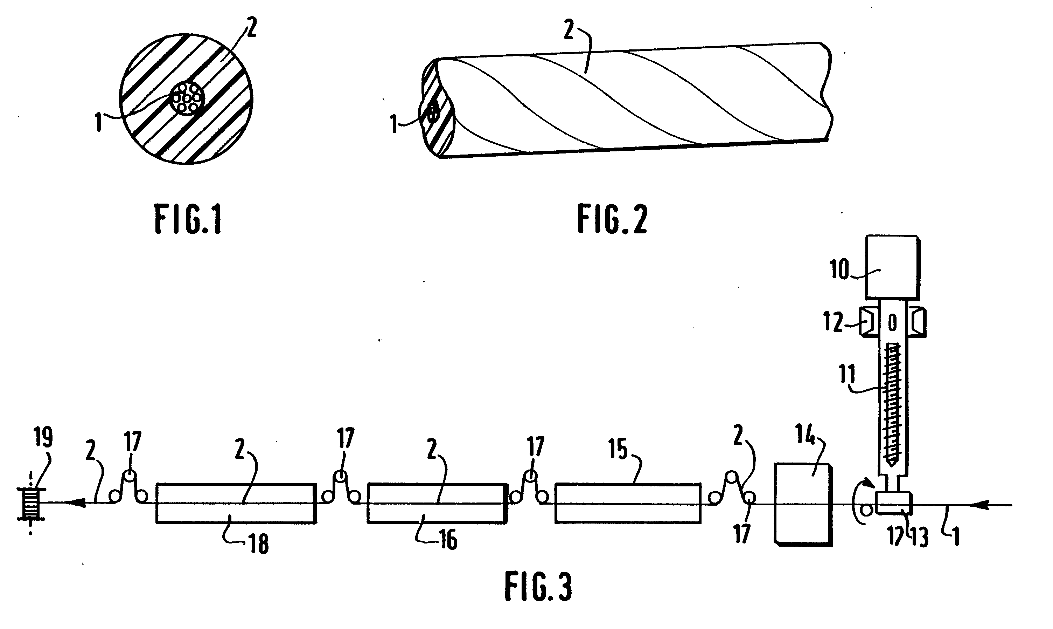

Sur la figure 1, on voit que la section de l'âme 1 est réduite par rapport à la section de l'ensemble de la corde, et par suite, à celle du revêtement actif 2. L'âme représentée est une âme à multifilaments qui peuvent être des filaments parallèles ou torsadés dans le même sens ou en sens opposé à celui du revêtement dynamique. La seule contrainte existant sur les caractéristiques de l'âme est celle d'un allongement suffisant pour subir sans détérioration l'étirement qui est appliqué sur le revêtement après constitution de la corde. Cette âme peut être en polyamide, en polyester, polyuréthane, etc... L'âme sert d'amortisseur des chocs radiaux au cours du jeu. Elle peut éventuellement être creuse.

Comme cela apparaît sur la figure 2, le revêtement dynamique 2 est de préférence torsadé. Cette caractéristique permet de lui donner un meilleur comportement aux angles et une meilleure souplesse améliorant la tenue à l'indentation ou pénétration mutuelle due à l'écrasement des cordes les unes sur les autres comme indiqué ci-dessus.

Le revêtement 2 en polyamide, polyester ou polyoléfine permet d'obtenir, pour une corde dont le diamètre est de 1,45 mm, une résistance à la rupture du revêtement proprement dit jusqu'à 65 daN, et un allongement dynamique à la rupture de 15 à 30%. La corde terminée présente une résistance à la rupture de 80 daN grâce à l'appoint de résistance de l'âme.

La figure 3 est un schéma d'une machine mettant en oeuvre le procédé de fabrication d'une corde selon l'invention. L'âme 1 passe à l'intérieur d'une tête 13 d'équerre qui, dans l'exemple représenté, est une tête tournante. La tête 13 est reliée à une extrudeuse 11 comprenant une vis d'extrusion, entraînée par un moteur 10 et tournant dans une cavité en correspondance avec une trémie d'alimentation 12 par laquelle sont introduits des granulés.

A la sortie de la tête 13, un refroidissement du revêtement extrudé est effectué en 14. Au cours du traitement ultérieur, la corde 2 va passer d'une part entre des rouleaux de tension 17, et dans une série de fours d'étirage 15, 16 et de stabilisation 18, avant d'être enroulée sur une bobine de réception 19.

La corde selon l'invention, permet donc d'allier une fabrication simple, faisant appel à un matériel classique, avec les caractéristiques des cordes composites.

**Revendications**

1. Corde synthétique pour tennis ou jeu analogue comprenant une âme centrale étirable (1) et un revêtement extérieur (2) extrudé sur l'âme (1) assurant la protection de l'âme, caractérisé en ce que la section de l'âme (1) est faible par rapport à la section du revêtement (2), l'ensemble de la corde subissant un étirage suivi d'une stabilisation thermique de sorte que, la réponse dynamique de la corde soit assurée par le revêtement (2).

2. Corde selon la revendication 1, caractérisé en ce que le revêtement (2) est torsadé.

3. Procédé de fabrication d'une corde selon l'une des revendications 1 ou 2, caractérisé en ce qu'il consiste à
- extruder sur une âme un matériau thermoplastique;
- étirer l'ensemble revêtement + âme;
- éventuellement torsader.

**FIG.1**

**FIG.2**

**FIG.3**

EP 0 377 362 A1

# RAPPORT DE RECHERCHE EUROPEENNE

Office européen
des brevets

Numero de la demande

EP  89 40 3452

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | EP-A-0 257 424  (SCHWERTL)<br>* Résumé; figure 1 *<br>--- | 1 | A 63 B   51/02 |
| Y | FR-A-1 190 769  (BABOLAT-MAILLOT-WITT)<br>* Page 2, colonne de droite, lignes 14-28; figure 1 *<br>--- | 1 | |
| A | FR-A-2 356 762  (ROBIN)<br>* Revendications 1,9 *<br>--- | 2 | |
| A | US-A-4 328 055  (NAKAMURA et al.)<br>* Résumé; colonne 1, lignes 41-54; colonne 2, lignes 46-68; figure 1 *<br>--- | 1-3 | |
| Y | US-A-4 289 465  (KILLMEYER, deceased et al.)<br>* Résumé; figures 1b,3,4 *<br>--- | 3 | |
| Y | EP-A-0 192 570  (LE NOANE)<br>* Résumé; page 2, lignes 21-27; figures 3,5 *<br>----- | 3 | |

**DOMAINES TECHNIQUES RECHERCHES (Int. Cl.5)**

A 63 B
B 05 D
G 10 D
B 29 C
G 02 B
A 01 K
D 07 B

Le présent rapport a été établi pour toutes les revendications

| Lieu de la recherche | Date d'achèvement de la recherche | Examinateur |
|---|---|---|
| LA HAYE | 12-03-1990 | ZEINSTRA H.S.J.H. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
 
& : membre de la même famille, document correspondant

EPO FORM 1503 03.82 (P0402)